## Europäisches Patentamt
## European Patent Office
## Office européen des brevets

(19)

(11) Veröffentlichungsnummer: **0 130 390**
**B1**

(12) **EUROPÄISCHE PATENTSCHRIFT**

(45) Veröffentlichungstag der Patentschrift:
**23.11.88**

(21) Anmeldenummer: **84106277.1**

(22) Anmeldetag: **01.06.84**

(51) Int. Cl.⁴: **B 65 D 30/24**

(54) Ventilsack.

(30) Priorität: **30.06.83 DE 3323587**

(43) Veröffentlichungstag der Anmeldung:
**09.01.85 Patentblatt 85/2**

(45) Bekanntmachung des Hinweises auf die Patenterteilung:
**23.11.88 Patentblatt 88/47**

(84) Benannte Vertragsstaaten:
**AT CH FR GB IT LI**

(56) Entgegenhaltungen:
**CA-A-1 008 414**
**DE-A-1 486 733**
**GB-A-956 599**

(73) Patentinhaber: **Windmöller & Hölscher,
Münsterstrasse 48- 52, D-4540 Lengerich i.W. (DE)**

(72) Erfinder: **Achelpohl, Fritz, Banningstrasse 3, D-4540
Lengerich (DE)**

(74) Vertreter: **Lorenz, Eduard, Rechtsanwälte Lorenz,
Eduard - Seidler, Bernhard Seidler, Margrit -
Gossel, Hans- K. Philipps, Ina, Dr.
Widenmayerstrasse 23, D-8000 München 22 (DE)**

EP 0 130 390 B1

LIBER, STOCKHOLM 1988

## Beschreibung

Die Erfindung betrifft einen Ventilsack nach dem Oberbegriff des Patentanspruchs 1.

Aus der Veröffentlichung CA-A-1 008 414 ist ein Ventilsack bekannt, der aus einem Schlauchabschnitt hergestellt worden ist, der durch überlappendes Einschlagen der Seitenteile einer einlagigen Folienbahn gebildet worden ist. Soll ein derartigen Ventilsack eine genügende Festigkeit aufweisen, muß die einlagige Folienbahn aus einem dicken Material bestehen. Dickes Folienmaterial hat nun aber den Nachteil, daß die den Ventilkanal bildenden Wandungen der einander überlappenden Seitenteile der Folienbahn relativ steif und fest sind, so daß dieser nach dem Befüllen keine genügende Dichtigkeit aufweist, weil sich die nach innen weisende Mündungskante des Ventilkanals nicht geschmeidig einfalten oder gegen die gegenüberliegende Wandung anlegen kann.

Diesen Nachteil eines schlecht dichtenden Ventilkanals vermeidet ein beispielsweise aus der DE-A-2 213 908 bekannter Ventilsack nach dem Oberbegriff des Patentanspruchs 1, der aus einer doppellagigen Materialbahn hergestellt ist. Durch diese Doppellagigkeit wird einmal eine genügende Festigkeit der Sackwandungen und zum anderen die gewünschte Geschmeidigkeit des Ventilkanals erreicht, weil zwei dünnere aufeinander liegende Folien eine bessere Geschmeidigkeit aufweisen als eine einlagige Folienbahn doppelter Dicke.

Die Herstellung des aus DE-A-2 213 908 bekannten Ventilsackes bereitet nun aber zusätzliche Schwierigkeiten, weil die Längsschweißnähte durch vier Lagen hindurchgehend ausgeführt werden müssen, andererseits aber verhindert werden muß, daß die einander überlappenden Seitenteile der eingeschlagenen doppelt liegenden Folienbahn auch mit dem die Rückwand bildenden Mittelteil verschweißen. Weiterhin vermögen die durch vier Lagen hindurch geführten Schweißnähte keinen elastischen Ausgleich in der Weise herbeizuführen, daß beide Lagen der doppellagigen Sackwandungen gleichmäßig belastet werden.

Aufgabe der Erfindung ist es daher, einen Ventilsack nach dem Oberbegriff des Patentanspruchs 1 zu schaffen, der sich bei einfacher Herstellung und gleichmäßiger Belastung der doppellagigen Sackwandungen gut verschließen läßt.

Erfindungsgemäß wird diese Aufgabe bei einem Ventilsack der gattungsgemäßen Art durch die kennzeichnenden Merkmale des Patentanspruchs 1 gelöst.

Die Herstellung des erfindungsgemäßen Ventilsackes ist dadurch vereinfacht, daß auf den seinerseits durch Umschlagen seiner seitlichen Bereiche zu einem Schlauch geformten flachliegenden Kunststoffolienschlauch durchgehend die Klebestreifen aufgebracht werden, die lediglich über die Breite der Füllkanäle durch eine Verklebung verhindernde Trennmittel überbrückt werden. Da die Klebstoffstreifen im Gegensatz zu einer Schweißnaht nur die aufeinanderliegenden Wandungen des Kunststoffolienschlauches miteinander zu verkleben vermögen, werden die Klebstoffaufträge im Bereich der Faltkanten des Kunststoffolienschlauches aufgebracht, so daß beide Lagen des Kunststoffolienschlauches, die die Sackwandung bilden, im wesentlichen gleichmäßig beansprucht werden.

Bei dem erfindungsgemäßen Ventilsack bildet der überlappte Teil des inneren Umschlags im Bereich des Füllkanals eine Ventillippe, die aufgrund der Doppellagigkeit des die Sackwandung bildenden Kunststoffolienschlauches eine ausreichende Flexibilität und Weichheit besitzt, um den Füllkanal unter dem Innendruck des Füllgutes dicht zu verschließen. Eine ausreichende Flexibilität dieser Dichtlippe ist auch dann gegeben, wenn der die Sackwandung bildende flachliegende Kunststoffolienschlauch durchgehend eine gleiche Wandstärke aufweist.

Um den bei der Herstellung auf die zu einem Schlauch geformte Kunststoffschlauchfolienbahn aufgebrachten Klebestreifen durchgehend ausführen zu können, wird der Kunststoffolienschlauch auf einer Seite über die Bereiche der späteren Füllkanäle mit Trennmittelaufträgen versehen, die aus Mitteln auf Silikonbasis bestehen können.

Statt derartiger flüssig aufgetragener Trennmittelaufträge können auch auf eine Seite des Kunststoffolienschlauches im Bereich der späteren Füllkanäle mit Haftkleber auf ihrer Außen-Seite mit Silikonaufträgen oder dergleichen versehene Trennzettel geklebt werden, deren untere Schenkel die Überlappung überragen. Der aus dem Ventilkanal herausragende Schenkel des Trennzettels kann nach dem Befüllen in der Weise abgezogen werden, daß die Haftklebstoffbeschichtung auf einer Wandung des Füllkanals verbleibt und der Füllkanal durch Andruck der aufeinanderliegenden Wandungsteile, die sodann miteinander verkleben, geschlossen werden kann.

Ein Ausführungsbeispiel der Erfindung wird nachstehend anhand der Zeichnung näher beschrieben. In dieser zeigt

Fig. 1 eine Draufsicht auf einen mit Seitenfalten versehenen Ventilsack, dessen doppellagigen Wandungen aus einem flachliegenden Kunststofffolienschlauch gebildet sind,

Fig. 2 einen Schnitt durch den Ventilsack längs der Linie II - II in Fig. 1;

Fig. 3 einen Schnitt durch den Ventilsack längs der Linie III - III in Fig. 1,

Fig. 4 eine Draufsicht auf eine andere Ausführungsform eines Ventilsacks, dessen Wandungen ebenfalls aus einer flachliegenden Kunststoffschlauchfolie gebildet sind,

Fig. 5 einen Schnitt durch den Ventilsack längs der Linie V - V in Fig. 4 und
Fig.6 einen Schnitt durch den Ventilsack längs
der Linie VI - VI in Fig. 4.

Der in den Figuren dargestellte Ventilsack ist durch Einschlagen der Seitenbereiche einer flachliegenden Schlauchfolienbahn und durch Einlegen von Seitenfalten gebildet. Boden- und kopfseitig ist der Ventilsack durch eine Bodennaht 2 und eine Kopfnaht 3, die als Querschweißnähte ausgeführt sind, geschlossen. Da die Ventilsäcke ausgehend von einer Schlauchbahn hergestellt werden, können die Boden- und Kopfschweißnähte als Querschweißtrennähte oder aber auch als Schweißnähte mit zwischen diesen liegenden Quertrennschnitten ausgeführt werden.

Im Bereich der Überlappung der eingeschlagenen Seitenteile der Kunststoffschlauchfolienbahn sind diese durch zwei im Abstand voneinander liegende Klebestreifen 4, 5 miteinander verbunden, wobei die Klebestreifen 4, 5 die Faltkanten 6, 13 der Schlauchfolienbahn 7, aus der der Sack gebildet ist, erfassen. Hierdurch wird erreicht, daß, beide Wandungen der Schlauchfolienbahn 7 bei auftretenden Kräften gleichmäßig belastet werden.

Die Leimstreifen 4, 5 erstrecken sich über die gesamte Länge des Ventilsackes 1. Im Bereich der Ventilöffnung 8 ist vor dem Einschlagen der Randbereiche des Folienschlauches 7 ein Trennmittel 9, beispielsweise auf Silikonbasis, formatmäßig aufgebracht worden, so daß über die Breite des Ventilkanals trotz durchgehend ausgeführter Leimstreifen 4, 5 keine Verklebung stattfindet.

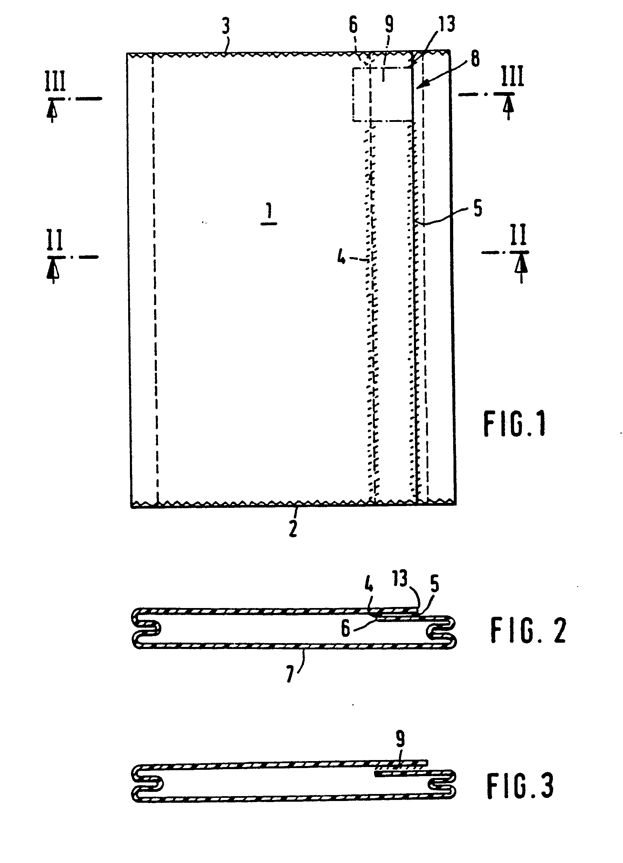

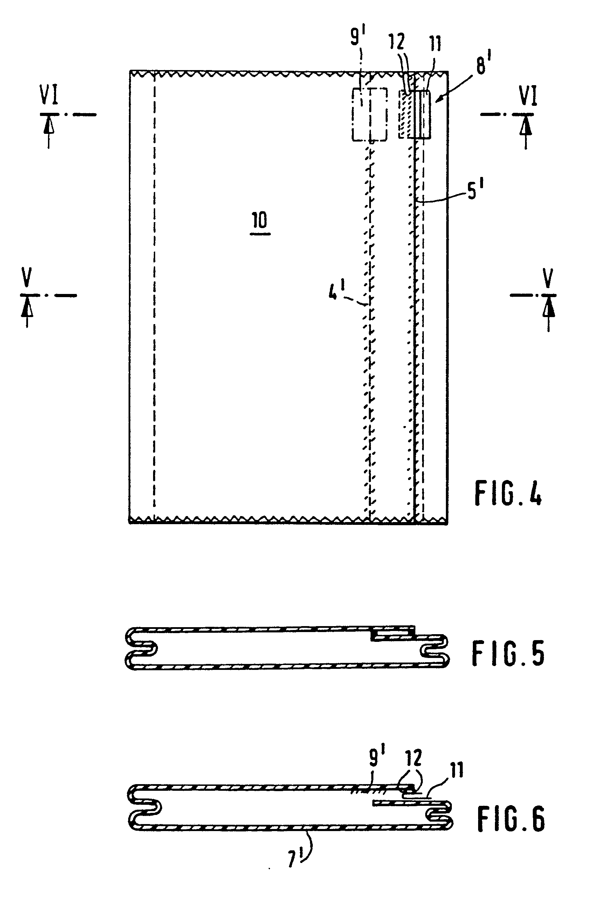

Der in den Fig. 4 bis 6 dargestellte Ventilsack 10 unterscheidet sich von dem in den Fig. 1 bis 3 dargestellten nur dadurch, daß im Ventilbereich 8' lediglich im Bereich der Klebenaht 4' ein Trennmittel 9 formatmäßig aufgebracht ist, während im Ventilbereich 8', der von der Klebenaht 5' durchlaufen wird, ein umgefalteter Trennzettel 11 eingelegt ist, der aus auf seiner Außenseite silikonisiertem Papier besteht und mittels eines Haftklebers 12 mit der äußeren Schlauchbahn 7' im Überlappungsbereich verbunden ist. Der innere Schenkel des umgefalteten Zettels 11 ragt aus dem Füllkanal heraus, so daß er nach dem Befüllen abgezogen werden kann. Der Haftklebauftrag verbleibt auf einer Wandung des Füllkanals, so daß dieser durch Andruck geschlossen werden kann.

Der Haftklebstoffauftrag 12 befindet sich zweckmäßigerweise neben dem Klebestreifen 5', so daß die Klebefähigkeit des Haftklebstoffauftrags durch einen heiß aufgetragenen Klebestreifen nicht beeinträchtigt werden kann.

## Patentansprüche

1. Ventilsack, bestehend aus einem flachliegenden doppellagigen Abschnitt aus Kunststoffolie (7), der durch einander teilweise überlappendes Umschlagen seiner seitlichen Bereiche zu einem Schlauchstück geformt ist, das mit quer Verlaufenden Kopf- (2) und Bodenschweißnähten (3) und im Bereich der Überlappung der seitlichen Randbereiche mit zwei im Abstand parallel zueinander verlaufenden, nur die einander überlappenden Randbereiche miteinander verbindenden Längsnähten (4, 5) versehen ist, die zur Bildung eines Füllkanals im Abstand vor der Kopfschweißnath enden oder unterbrochen sind, dadurch gekennzeichnet,
daß der doppellagige Kunststoffolienabschnitt ein flachgelegter Schlauchabschnitt ist,
daß die Längsnähte als Klebenähte (4, 5, 4', 5') ausgeführt sind und die Faltkanten (6, 13) des Abschnitts (7, 7') des Kunststoffolienschlauches erfassen und
daß eine Seite des Abschnitts (7, 7') des Kunststoffolienschlauches über die Breite des Füllkanals (8) mindestens im Bereich der Klebestreifen mit einem die Verklebung verhindernden Trennmittel versehen ist.

2. Ventilsack nach Anspruch 1, dadurch gekennzeichnet, daß der Kunststoffolienschlauch (7, 7') auf einer Seite über den Bereich des Füllkanals (8) mit einem aus einem Silikonauftrag (9) oder dergleichen bestehenden Trennmittel beschichtet ist.

3. Ventilsack nach Anspruch 1, dadurch gekennzeichnet, daß auf eine Seite des Kunststoffolienschlauches im Bereich des Füllkanals mit einem Haftkleber ein das Trennmittel bildender, auf sich gefalteter und auf seiner Außenseite mit einem Silikonauftrag oder dergleichen versehener Trennzettel geklebt ist, dessen unterer Schenkel die Überlappung überragt.

4. Ventilsack nach Anspruch 1, dadurch gekennzeichnet, daß eine Seite des Kunststoffolienschlauches (7') über die Breite des Füllkanals (8') im Bereich des inneren Klebestreifens (4') formatmäßig mit einem Trennmittelauftrag (9') und im Bereich des äußeren Klebestreifens (5') mit einem mit einer Seite durch einen Haftklebstoffauftrag (12) mit einem auf sich gefalteten Trennzettel versehen ist, dessen unterer Schenkel den Füllkanal (8') überragt.

5. Ventilsack nach einem der Ansprüche 1 bis 4, dadurch gekennzeichnet, daß die innere Faltkante des Kunststoffolienschlauches (7, 7') im Bereich des Ventilkanals (8, 8') aufgetrennt ist.

## Claims

1. A valved sack consisting of a flattened, two-ply section of plastics film (7), which has been formed into a tube section in that its side portions have been reversely folded to overlap each other in part, which tube section is provided with transversely extending top (2) and bottom (3) seam welds and in the region in which the lateral edge portions overlap is provided with two spaced apart, parallel longitudinal seams (4, 5), which interconnect only the mutually overlapping edge portions and which terminate or are interrupted short of the top seam weld so that a filling passage is formed, characterized in that the two-ply section of plastics film is a flattened tube section, the longitudinal seams consist of adhesive seams (4, 5, 4', 5') and contact the fold lines (6, 13) of the section (7, 7') of the tubular plastics film and one side of the section (7, 7') of the tubular plastics film is provided with an antiblocking release agent across the width of the filling passage (8) at least adjacent to the adhesive straps.

2. A valved sack according to claim 1, characterized in that the tubular plastics film (7, 7') is coated on one side with a release agent that consists of a layer of silicone (9) or the like over the region of the filling passage.

3. A valve sack according to claim 1, characterized in that a release slip provided on its outside with a layer of silicone or the like is adhesively joined by a pressure-sensitive adhesive to one side of the tubular plastics film adjacent to the filling passage and the lower leg of said slip protrudes from the overlap.

4. A valved sack according to claim 1, characterized in that the tubular plastics film (7') is provided on one side over the width of the filling passage (8) adjacent to the inner adhesive strip (4') with a formatted layer of a release layer (9') and adjacent to the outer adhesive strip (5') with a release slip that is folded on itself and is joined to one side by a layer of pressure-sensitive adhesive (12) and the lower leg of said slip protrudes from the filling passage (8').

5. A valved sack according to any of claims 1 to 4, characterized in that the inner fold edge of the tubular plastics film (7, 7') has been cut open adjacent to the valve passage (8, 8').

**Revendications**

1. Sac à valve, consistant en une section de film plastique (7) à double couche, mise à plat qui a été formée en une section tubulaire en repliant les bords latéraux pour que ceux-ci chevauchent partiellement, section tubulaire qui est pourvue de soudures transversales en tête (2) et au fond (3) et dans la zone du chevauchement des bords latéraux de deux coutures longitudinales espacées et placées réciproquement en parallèle et ne reliant que les bords chevauchants, coutures longitudinales qui sont prévues pour former un canal de remplissage et qui se terminent à une certaine distance de la couture de tête ou sont interrompues,

caractérisé en ce que,
la section de film plastique à double couche est une section tubulaire mise à plat,
que les coutures longitudinales sont formées comme coutures collantes (4, 5, 4', 5') qui saisissent les bords de pliure (6, 13) de la section (7, 7') du film tubulaire en plastique et
qu'un côté de la section (7, 7') du film tubulaire en plastique est pourvu sur la largeur du canal de remplissage (8) au moins dans la zone des bandes adhésives d'un agent séparateur empêchant l'encollage.

2. Sac à valve selon la revendication 1, caractérisé en ce que le film tubulaire en plastique (7, 7') est enduit d'un côté sur la zone du canal de remplissage (8) d'un enduit de silicone (9) ou d'un produit semblable constituant l'agent de séparation.

3. Sac à valve selon la revendication 1, caractérisé en ce que sur un côté du film tubulaire en plastique dans la zone du canal de remplissage est collée une étiquette de séparation pourvue d'une couche de silicone ou d'un produit semblable sur son côté extérieur et étant repliée sur elle-même et formant avec un adhésif sensible à la pression le produit de séparation, étiquette dont la partie inférieure dépasse le chevauchement.

4. Sac à valve selon la revendication 1 caractérisé en ce que le film tubulaire en plastique (7') est pourvu d'un côté sur la largeur du canal de remplissage (8') à proximité de la bande adhésive intérieure (4') d'une couche formatée séparatrice (9') et à proximité de la bande adhésive extérieure (5') d'une étiquette de séparation qui est repliée sur elle-même et est jointe à un côté par une couche d'adhésif sensible à la pression (12), la partie inférieure de ladite étiquette dépassant du canal de remplissage (8').

5. Sac à valve selon l'une quelconque des revendications 1 à 4 caractérisé en ce que le bord de pliure intérieur du film tubulaire en plastique (7, 7') a été coupé ouvert à proximité du canal de la valve.

FIG.1

FIG. 2

FIG.3

FIG.4

FIG.5

FIG.6